Europäisches Patentamt

European Patent Office

Office européen des brevets

(11) Publication number: **0 029 288**
**B1**

(12) **EUROPEAN PATENT SPECIFICATION**

(45) Date of publication of patent specification: **19.06.85**

(21) Application number: **80303310.9**

(22) Date of filing: **22.09.80**

(51) Int. Cl.⁴: **E 04 B 1/82, C 08 L 19/00, D 06 N 7/00, C 08 J 9/42**

(54) An acoustical-damping fibrous or cellular material, a process for its preparation and a latex composition useful for its preparation.

(30) Priority: **22.10.79 GB 7936604**

(43) Date of publication of application:
**27.05.81 Bulletin 81/21**

(45) Publication of the grant of the patent:
**19.06.85 Bulletin 85/25**

(84) Designated Contracting States:
**DE FR GB IT NL SE**

(56) References cited:
**DE-B-1 053 173**
**FR-A-1 321 645**
**FR-A-1 365 200**
**FR-A-1 481 176**
**FR-A-1 574 789**
**GB-A-1 310 241**
**US-A-2 777 008**
**US-A-3 424 270**
**US-A-3 706 708**
**US-A-3 895 143**
**US-A-4 110 510**

**CHEMICAL ABSTRACTS, vol. 89, 30th October 1978, page 52, no. 147942e Columbus, Ohio, U.S.A.**

(73) Proprietor: **E.I. DU PONT DE NEMOURS AND COMPANY**
**1007 Market Street**
**Wilmington Delaware 19898 (US)**

(72) Inventor: **Coe, David Gordon**
**7 Hadden Court Shakespeare Road**
**Harpenden Hertfordshire (GB)**
Inventor: **Price, David Wharton Russell**
**Pathways Austen Wood Lane**
**Gerrards Cross Buckinghamshire (GB)**

(74) Representative: **Pett, Christopher Phineas et al**
**Frank B. Dehn & Co. European Patent Attorneys**
**Imperial House 15-19 Kingsway**
**London WC2B 6UZ (GB)**

## Description

This invention relates to improvements in or relating to acoustic damping. More particularly it relates to an acoustic damping structure prepared from a filled polymer latex or emulsion and a filled polymer latex or emulsion composition itself.

It has been proposed to incorporate fillers into viscoelastic materials, including polychloroprene, referred to herein as neoprene, polyvinylidene chloride and polyvinyl chloride, so as to provide compositions which when adhered to metal or other substrates provide acoustic damping structures. Our British Patent Specification No. 1,305,768 describes some such proposals and the results obtained.

It has further been suggested, in U.S. Patent Specification 3,895,143, to provide a damping material in which inorganic fibres such as asbestos fibres and a finely divided lead filler are mixed and adhered together by an elastomer latex and then formed into a sheet. Such a sheet includes a fibrous material, filler and latex in a homogeneous composite.

We have now found that a more convenient and efficient acoustic damping material suitable for use in, for example, automotive applications and building applications may be obtained if a substrate comprising a fibrous mat e.g. of cotton or felt or glass fibre or a polymeric cellular material e.g. a foam, is coated with a heavily filled polymer latex or emulsion and then dried, thereby avoiding the need to adhere a sheet composition as described in British Patent Specification No. 1,305,768 which operation is complicated for adhesion to a complex moulded body.

In our invention our composition is applied as a surface coating on the fibrous mat or cellular material and impregnation occurs only to the extent of allowing mechanical adhesion or keying at the surface of the substrate. In this way an acoustic material is formed which has improved properties. The substrate i.e. coated mat or cellular material may be provided in a variety of shapes and sizes to suit the requirements of the user, for example on building or automobile body panels. Such coated substrates may also, in certain circumstances, be themselves mouldable which is a further advantage.

Accordingly, we provide an acoustic damping material comprising a fibrous mat or polymeric cellular material coated with composition selected from elastomeric and plasticised plastomeric latices or emulsions of styrene-butadiene rubbers, neoprene, polyvinyl chloride, or ethylene-vinylacetate copolymers of a mixture of two or more thereof, and dried, the composition containing a filler having a specific gravity of at least 2.5 and a particle size of from 1 to 200 micrometers the amount of filler being effective to provide from 60 to 85% total solids by weight of wet composition prior to drying, together with at least 1.5 parts per hundred parts of dry rubber or other polymer of an anionic or non-ionic surfactant.

The term "neoprene" is generally understood in the art to cover both chloroprene homopolymers and copolymers obtained by the copolymerisation of chloroprene with minor amounts of dichloro-1,3-butadiene and/or methacrylic acid. If methacrylic acid is employed it will desirably provide from 1 to 3% by weight of carboxyl groups in the copolymer.

Ethylene-vinylacetate copolymers include copolymers containing amounts of a third monomer, for example vinyl chloride.

Styrene-butadiene rubbers may optionally contain a minor proportion of a carboxylic acid group-containing monomer, such as methacrylic acid, thus providing the so-called carboxylated SBR.

We also provide a method for the preparation of an acoustic damping material which comprises coating the fibrous mat or polymeric cellular material with a filled latex or emulsion composition selected from elastomeric and plasticised plastomeric latices of styrene-butadiene rubber, neoprene, polyvinyl chloride or ethylene-vinylacetate copolymers or a mixture of two or more thereof, the composition being filled with a filler having a specific gravity of at least 2.5 and a particle size of from 1 to 200 micrometers, the amount of filler being effective to provide from 60 to 85% total solids by weight of wet composition prior to drying, together with at least 1.5 parts per hundred parts of dry rubber or other polymer of an anionic or non-ionic surfactant, and then drying the coated fibrous mat or polymeric cellular material.

We further provide a composition comprising a latex or emulsion selected from elastomeric and plasticised plastomeric latices or emulsions of styrene-butadiene rubber, neoprene, polyvinyl chloride, or ethylene-vinylacetate copolymer or a mixture of two or more thereof, containing a filler having a specific gravity of at least 2.5 and a particle size of from 1 to 200 micrometers, the amount of filler being effective to provide from 60 to 85% total solids by weight of wet composition prior to drying, together with at least 1.5 parts per hundred parts of dry rubber or other polymer of an anionic or non-ionic surfactant.

It is preferred to employ a neoprene latex composition in this invention. Neoprene itself is generally to be preferred for the resistance it provides to heat, oil and flame, all of which are found in an automotive environment. The neoprene latex itself will desirably be one of the latices currently available and which generally contain between 45 and 60% by weight of solids, though this is not critical.

The latex will desirably comprise a sol polymer or low or medium gel polymer. Such polymers are well-known see for example "Neoprene Latex", Internat. Edn. by J. C. Carl of E.I. Du Pont de Nemours and Company (1962). Such polymers generally provide a higher wet gel strength which tends to reduce the tendency for the filled polymer coating to crack when it is ultimately dried. Minor fissures in the surface of the dried polymer coating are not considered to be significant from the point of view of acoustic properties though it is preferred to avoid them if possible.

The filler will desirably be an inert inorganic material, advantageously having a specific gravity of 3 or more, and preferably of more than 4. Some particularly preferred fillers have a specific gravity of about 4.5. Suitable heavy fillers of this type include ilmenite or other titanium dioxide-based ores, iron oxide and iron pyrites but the most preferred filler is barytes. However, it may also be desirable in the interests of economy to use a lighter filler, e.g. one having a specific gravity of between 2.5 and 3.0 such as slate dust. Although this would necessitate increasing the thickness of the acoustic coating, it might still prove economical in view of having, for example, 60% of the specific gravity of barytes at 30% of the cost.

It is preferred to use a filler of average particle size between 1 and 150 micrometers, most desirably from 75 to 100 micrometers. For reasons of economy, it is clearly preferred to employ the maximum amount of filler compatible with the minimum amount of polymer latex or emulsion. The amount of filler used and the solids content of the final composition are principally determined by the particle size of the filler employed, and the nature of the polymer. In general, it is preferred that the amount of filler be sufficient to provide from 500 to 1500 parts thereof per 100 parts of dry rubber or other polymer in the polymer product. The filler will generally be added to the composition in dry form though it may be desirable under certain circumstances to add it in the form of an aqueous dispersion or slurry.

Care should always be exercised that where fillers are employed from a crude mineral source, they do not give rise to any reaction in the presence of water which would affect the stability of the latex or emulsion. Typical of such reaction would be the presence of soluble polyvalent metal ions or an acidic pH reaction. Such problems will be readily apparent to those skilled in the art.

The surfactant is employed to stabilise the latex or emulsion and assist in avoiding adverse reaction of it with the filler. It also assists in providing the composition with adequate mechanical stability during the coating process.

The surfactant employed must generally be anionic or non-ionic. Cationic surfactants are unsuitable for use with anionic latices of the type employed in this invention. The surfactant will most desirably be a non-ionic surfactant and will preferably be a polyethylene oxide alkyl phenol condensate containing, for example, from 10 to 50 ethylene oxide units. Particularly suitable non-ionic surfactants include polyethylene oxide nonyl phenol condensates such as Arkopal N 230, obtainable from Farbwerke Hoechst A.G. Other suitable non-ionic surfactants include Synperonic NP 20 available from ICI Ltd. or Ethylan HA available from Lankro. However, anionic surfactants may be employed in order to achieve specific effects, such as enhanced mechanical stability such as obtained when using sodium alkyl sulphates e.g. sodium lauryl sulphate, or in facilitating the dispersion of dry filler in the latex or emulsion, as is achieved using a sodium alkyl sulphosuccinate. Such surfactants will generally be used in conjunction with a non-ionic surfactant.

The amount of surfactant employed will be in proportion to the quantity of filler employed. There is no real restriction on the upper limit of surfactant that may be employed provided stabilisation of the polymer occurs. Although amounts of total surfactant of up to 10 parts per hundred parts of dry rubber or other polymer in the final product may be employed, the amount of total surfactant will in general vary between 1.5 and 5 parts per hundred parts of dry rubber or other polymer in the final product.

The latex or emulsion composition will generally also contain other components which are conventional in the compounding of latices or emulsions of the particular polymer concerned. Such other components are well-known in the art, and are generally added in the form of aqueous dispersions or emulsions. Thus, for example, a neoprene latex will generally also contain an acid acceptor such as zinc oxide in an amount of 5 to 15 parts per hundred of dry rubber or other polymer, and an antioxidant such as a substituted or hindered phenol e.g. alkylated phenols or bisphenols or aromatic amine condensation products e.g. Antioxidant 2246 as obtainable from Cyanamid of Great Britain Limited and present in from 1 to 4 parts per hundred parts of dry rubber or other polymer. Auxiliary stabilisers such as potassium or ammonium caseinate may be employed in neoprene latices particularly for mechanical stability and as an agent to minimise caking of the composition and may be present in from 0.5 to 2 parts per hundred parts of dry rubber or other polymer. A thickener may be present in order to achieve a viscosity which will minimise the sedimenting of high density fillers and also render the latex or emulsion suitable for the method of application to the substrate selected, the thickener being either cellulosic e.g. methylcellulose, or a natural gum e.g. guar gum, or a polyacrylate. Ingredients may be added to assist in the dispersion of dry fillers, e.g. Calgon T (sodium hexametaphosphate) available from Albright and Wilson). Flame-retardants are, for example, sometimes used when compounding styrene-butadiene rubbers. These and many other additives appropriate in the compounding of the particular polymer being employed may be included without any adverse effects.

Water may be added to the composition as desired to alter the final solids content to a suitable level within the 60 to 85% by weight solids required, preferably to a level of from 75 to 85% by weight. The amount of water added will clearly depend on the solids content of the latex used and on the amount of any water, if any, that has been added with any of the other ingredients of the composition. It may, for example, have been desirable to add the zinc oxide or filler in the form of an aqueous slurry.

The substrate when in the form of a fibrous mat will most desirably be a non-woven mat of glass fibre. This may be coated when in the form of a resin-bonded glass fibre panel or mat or may be rather more loose in the form of glass fibre batting. The glass fibre will generally have a density of from 20 kg/m³ for lightly compacted material, up to 100 kg/m³ for compressed material though these ranges are not critical.

We have found the coating of compressed material to be of greater value in use as acoustic material since the composite provides a sprung mass.

The fibrous mat may also be non-woven in the form of a cotton or other felt, or woven in the form of a natural or synthetic fabric such as could be used in laminated construction.

The substrate when in the form of a polymeric cellular material may be one of many types of foam and may be for example, a polyurethane foam or reconstituted polyurethane foam.

The fibrous mat or polymeric cellular material will desirably be coated so as to provide a coating of from 1.5 kg/m² to 9 kg/m², more preferably about 3 to 6 kg/m² of material. Ingredients designed to promote accelerated gelling of the polymer may be added shortly before or during the coating process. These include delayed action gelling agents, e.g. silicofluorides, or heat sensitisers such as ammonium salts or polyvinylmethylethers.

A full description of ingredients suitable for compounding with latices or emulsions in order to enhance their properties is to be found in the above-mentioned reference "Neoprene Latex". In addition bitumen emulsions may also be used for compounding in certain latices or emulsions in the interests of economy e.g. in synthetic rubber latices.

The composition may be compounded for application to the substrate by a variety of means, the viscosity of the composition varying according to the means chosen. Thus, if the substrate is to be flow-coated with the composition a viscosity of from 5000 to 20000 mPa . s should be attained. For application by spraying, the composition should have a viscosity of from 1000 to 5000 mPa . s. If the composition is to be spread over the substrate, a viscosity of at least 20000 mPa . s or even higher may be suitable. Whichever form of application is selected, it is clearly envisaged that the porosity of the substrate will enable sufficient impregnation of it by the composition so that the composition will be retained both on the surface of the substrate and within a portion thereof by a mechanical adhesion. This obviates the need for any chemical adhesion and is a further advantage of the process. As mentioned above, the composition is applied as a coating on the substrate and impregnation only occurs to the extent of allowing mechanical adhesion or keying at the surface of the substrate.

The acoustic material may be attached to whichever article it is intended for by generally conventional means. Thus, for automotive use, the material may be clipped to or adhered to the metallic backing member e.g. bulkhead or panel where it is desired to create the damping effect. As has been mentioned, some materials of the invention may themselves be moulded after they have been dried and this allows coverage of awkwardly shaped surfaces.

The invention will now be more particularly described in the following Examples which should not be construed as limiting:

Example 1

The following ingredients were mixed together in a vessel provided with mechanical agitation. The thickener is premixed with a small portion of the mixture and then added to the bulk under conditions of high shear in order to achieve a uniform consistency.

|  | Parts by weight (wet) | Equivalent to parts by weight when dry |
|---|---|---|
| Neoprene latex NPG 4328 (medium gel polymer approx. 56% by weight solids) | 178 | 100 |
| Zinc Oxide | 20 | 10 |
| Ammonium caseinate | 10 | 1 |
| Antioxidant 2246 | 9 | 3 |
| Arkopal N-230 surfactant (an ethoxylated nonyl phenol with an average of 23 ethoxy units) | 16 | 1.6 |
| Water 37 g | (to provide 80% solids when wet) | |
| Barytes 200 Mesh (about 83% pure, S.G. about 4.05) | | 500 |
| Texigel 23-005 (a sodium polyacrylate gel available from Scott Bader) | | 3 |

4

After mixing, the viscosity of the composition was about 13000 mPa . s as measured on a Brookfield LVF instrument Spindle No. 4 at 12 r.p.m. The composition was applied to a compressed resin-bonded glass fibre mat to provide a coating weight of 3.6 kg/m². The coated product was then passed into an oven for drying at 150°C for about 30 minutes depending on the oven efficiency to provide an acoustic damping material.

Example 2
The procedure of Example 1 was followed using the following ingredients

| | Parts by weight (wet) | Equivalent to parts by weight when dry |
|---|---|---|
| Neoprene latex NPG 4328 | 178 | 100 |
| Zinc Oxide | 20 | 10 |
| Ammonium caseinate | 10 | 1 |
| Antioxidant 2246 | 9 | 3 |
| Arkopal N-230 surfactant | 30 | 3 |
| Water 153 g | (to provide 80% solids when wet) | |
| Barytes 200 Mesh (about 83% pure, S.G. about 4.05) | | 1000 |
| Texigel 23-005 | | 3 |

Examples 3 and 4
The following compositions were prepared using the conditions described in Example 1.

| | Example | |
|---|---|---|
| | 3 | 4 |
| | (equivalent to parts by weight when dry) | |
| Neoprene latex 654 (medium/low gel polymer, approx. 59% by weight solids) | 100 | — |
| Neoprene latex 635 (low gel polymer, approx. 60% by weight solids) | — | 100 |
| Zinc oxide | 7.5 | 7.5 |
| Antioxidant 2246 | 2 | 2 |
| Carbon black | 3 | 3 |
| Ammonium caseinate | 2 | 2 |
| Sodium dioctyl sulphosuccinate | 1.5 | 1.5 |
| Arkopal N-230 surfactant | 1.5 | 1.5 |
| Water | to give finished solids content of 81% | |
| Crude ilmenite 100 mesh (S.G. 4.1) | 750 | 750 |
| Texigel 23-005 | 4 | 4 |

# 0 029 288

After compounding, the compositions were spread onto a fibreglass mat to give a coating weight of 5 kg/m² and dried at 120°C without cracking. It was possible to place sheets of these composites into a mould, such as of a car bulkhead and by compressing them for a period of five minutes at 150°C to form them into the appropriate shape.

Example 5

The following constituents were mixed under the conditions of Example 1.

|  | Equivalent to parts by weight when dry |
| --- | --- |
| Neoprene latex 102 (low gel non-ionic latex, approx. 46% by weight solids) | 100 |
| Zinc oxide | 5 |
| Cymel 301 (a grade of hexamethoxymelamine from Cyanamid (UK) Ltd.) | 30 |
| Wingstay L (butylated reaction product of p-cresol and dicyclopentadiene from Goodyear) | 2 |
| Butyl carbitol | 5 |
| Propylene glycol | 2 |
| Barytes 200 mesh (about 83% purity, S.G. about 4.05) | 700 |
| Carbon black | 3 |
| Water | to give finished solids content of 80% |

The zinc oxide used in this Example was prepared as an aqueous dispersion by ball-milling in sodium hydroxide solution — the dispersion comprises:

Zinc oxide 81 parts by weight, sodium hydroxide 40 parts by weight, water 360 parts by weight and polyvinyl alcohol 4 parts by weight.

Example 6

The following constituents were mixed under the conditions of Example 1.

|  | Equivalent to parts by weight when dry |
| --- | --- |
| Mowilith 122 (a vinyl acetate/ethylene/vinyl chloride terpolymer emulsion from Hoechst A.G.) | 100 |
| Triton X-100 | 2 |
| Water | to give finished solids content of 80% |
| Barytes 200 mesh (approx. 83% pure, S.G. about 4.05) | 700 |
| Carbon black | 3 |
| Texigel 23-005 | 3 |

The composition may be applied to a substrate in the manner previously disclosed.

Two evaluations of the acoustic performance of a latex/substrate system of this invention have been made.

1. Transmission loss by Apamat tester

An Apamat machine (as manufactured by Interkeller, Zurich, Switzerland and referred to, inter alia, in French Patent Publication No. 2,108,435) was used to test the increase in transmission loss over a range of

6

frequencies provided by neoprene latex composition coatings of 3.26 and 5.44 kg/m$^2$ on glass fibre boards. The neoprene-coated glass fibre boards may be obtained by a process as described in Example 1 except that for the tests carried out, the composition contained 750 parts by weight when dry of barytes per 100 parts of neoprene. The increase in loss is that increase over an uncoated glass fibre board. The thickness of the coating is approx. 2 mm. The results are shown in Table 1.

The words neoprene, Arkopal, Synperonic, Ethylan, Calgon, Texigel, Cymel, Wingstay, Mowlith, Triton and Apamat are trade marks.

TABLE 1

| Material | Total wt kg/m² | Total thickness including coating | Transmission loss (dB) Frequency (Hz) | | | | | | | | | | | | | | | | | |
|---|---|---|---|---|---|---|---|---|---|---|---|---|---|---|---|---|---|---|---|---|
| | | | 100 | 200 | 300 | 400 | 500 | 600 | 700 | 800 | 900 | 1K | 2K | 3K | 4K | 5K | 6K | 7K | 8K | 9K | 10K |
| 1. Light Neoprene Coating (3.26 kg/m²) on Fibreglass Crown S200 (0.396 kg/m²) | 3.66 | ~12.7 mm | 7 | 6 | 6 | 3 | 4 | 4 | 6 | 8 | 9 | 10 | 12 | 16 | 17 | 18 | 19 | 19 | 19 | 19 | 18 |
| 2. Light Neoprene Coating (3.26 kg/m²) on Fibreglass Crown S300 (0.593 kg/m²) | 3.85 | ~12.7 mm | 8 | 6 | 6 | 2 | 3 | 3 | 4 | 7 | 7 | 9 | 11 | 15 | 17 | 18 | 21 | 22 | 22 | 22 | 22 |
| 3. Heavy Neoprene Coating (5.43 kg/m²) on Fibreglass Crown S200 (0.396 kg/m²) | 5.83 | ~12.7 mm | 8 | 7 | 7 | 5 | 6 | 6 | 9 | 12 | 13 | 14 | 17 | 20 | 22 | 22 | 22 | 22 | 22 | 21 | 20 |
| 4. Heavy Neoprene Coating (5.43 kg/m²) on Fibreglass Crown S300 (0.593 kg/m²) | 6.03 | ~12.7 mm | 8 | 5 | 6 | 5 | 6 | 8 | 10 | 12 | 12 | 12 | 15 | 17 | 21 | 21 | 22 | 22 | 22 | 22 | 22 |

0 029 288

2. Transmission loss measured according to BS2750

Losses were measured under laboratory conditions at Sound Research Limited generally in accordance with BS2750 — "Recommendations for field and laboratory measurement of airborne and impact sound transmission in buildings". The loss in decibels at different frequencies is as follows, for coatings on approx. 12.7 mm thick glass fibre, as compared to uncoated glass fibre.

| Frequency (Hz) | 63 | 125 | 250 | Loss (dB) 500 | 1K | 2K | ·4K | 8K |
|---|---|---|---|---|---|---|---|---|
| 1. Coating wt 3.26 kg/m² | 13 | 11 | 12 | 15 | 19.5 | 24.5 | 29.5 | 32.5 |
| 2. Coating wt 5.38 kg/m² | 11 | 13.5 | 17.5 | 19.5 | 24 | 28 | 32.5 | 35 |

**Claims**

1. An acoustic damping material comprising a fibrous mat or polymeric cellular material coated with a composition selected from elastomeric and plasticised plastomeric latices or emulsions of styrene-butadiene rubbers, polychloroprene, polyvinyl chloride, or ethylene-vinylacetate copolymers, or a mixture of two or more thereof, and dried, the composition containing a filler having a specific gravity of at least 2.5 and a particle size of from 1 to 200 microns, the amount of filler being effective to provide from 60 to 85% total solids by weight of wet composition prior to drying, together with at least 1.5 parts per hundred parts of dry rubber or other polymer of an anionic or non-ionic surfactant.

2. A material as claimed in claim 1 wherein the latex or emulsion is a polychloroprene latex.

3. A material as claimed in claim 1 or claim 2 wherein the filler has a specific gravity of 3 or more.

4. A material as claimed in any of claims 1 to 3 wherein the filler has an average particle size of from 75 to 100 microns.

5. A material as claimed in any of claims 1 to 4 wherein the filler is barytes.

6. A material as claimed in any of claims 1 to 5 wherein the amount of filler provides from 500 to 1500 parts thereof per hundred parts dry rubber or other polymer in the dried polymer product.

7. A material as claimed in any of claims 1 to 6 wherein the surfactant is a non-ionic surfactant being a polyethylene oxide alkyl phenol condensate containing 10 to 50 ethylene oxide units and is present in from 1.5 to 5 parts per hundred parts of dry rubber or other polymer in the final product.

8. A material as claimed in any of claims 1 to 7 wherein the fibrous mat is a non woven mat of glass fibre or is cotton felt.

9. A material as claimed in any of claims 1 to 8 wherein the fibrous mat or polymeric cellular material is coated to provide a coating of from 3 to 6 kg/m² of material.

10. A method for the preparation of an acoustic damping material which comprises coating a fibrous mat or polymeric cellular material with a filled latex or emulsion composition selected from elastomeric and plasticised plastomeric latices of styrene-butadiene rubbers, polychloroprene, polyvinyl chloride or ethylene-vinylacetate copolymers or a mixture of two or more thereof, the composition being filled with a filler having a specific gravity of at least 2.5 and a particle size of from 1 to 200 micrometers, the amount of filler being effective to provide from 60 to 85% total solids by weight of wet composition prior to drying together with at least 1.5 parts per hundred parts of dry rubber or other polymer of an anionic or non-ionic surfactant and then drying the coated fibrous mat or polymeric cellular material.

11. A method as claimed in claim 10 wherein both the viscosity of the composition and the porosity of the fibrous or polymeric cellular material prior to coating are effective to enable sufficient impregnation of the fibrous mat or cellular polymeric material by the composition whereby the composition is retained both on the fibrous mat or cellular polymeric material and within a portion thereof by mechanical adhesion.

12. A latex composition comprising a latex or emulsion selected from elastomeric and polasticised plastomeric latices or emulsions of styrene-butadiene rubbers, polychloroprene, polyvinyl chloride, or ethylene-vinylacetate copolymers or a mixture of two or more thereof containing a filler having a specific gravity of at least 2.5 and a particle size of from 1 to 200 micrometers, the amount of filler being effective to provide from 60 to 85% total solids by weight of the wet composition together with at least 1.5 parts per hundred parts of dry rubber or other polymer of an anionic or non-ionic surfactant.

**Patentansprüche**

1. Schallschluckmaterial aus einer faserigen Matte oder polymerem zellförmigen Material, die mit einer aus elastomeren oder plastifizierten plastomeren Latices oder Emulsionen von Styrol-Butadien-Kautschuken, Polychloropren, Polyvinylchlorid oder Ethylen-Vinylacetat-Copolymerisaten oder Mischungen von zwei oder mehr dieser Stoffe ausgewählten Zusammensetzung beschichtet und dann getrocknet sind, wobei die Zusammensetzung einen Füllstoff mit einem spezifischen Gewicht von wenigstens 2,5 und einer Teilchengröße von 1 bis 200 µm, wobei die Menge des Füllstoffs 60 bis 85 Gew.-% des Gesamt-Feststoff-Gehalts der feuchten Zusammensetzung vor dem Trocknen beträgt,

**0 029 288**

zusammen mit wenigstens 1,5 Teilen eines anionischen oder nicht-ionischen grenzflächenaktiven Mittels auf 100 Teile des trockenen Kautschuks oder anderen Polymers enthält.

2. Material nach Anspruch 1, dadurch gekennzeichnet, daß das Latex oder die Emulsion ein Polychloropren-Latex ist.

3. Material nach Anspruch 1 oder Anspruch 2, dadurch gekennzeichnet, daß der Füllstoff ein spezifisches Gewicht von 3 oder mehr besitzt.

4. Material nach irgendeinem der Ansprüche 1 bis 3, dadurch gekennzeichnet, daß der Füllstoff eine mittlere Teilchengröße von 75 bis 100 µm besitzt.

5. Material nach irgendeinem der Ansprüche 1 bis 4, dadurch gekennzeichnet, daß der Füllstoff Baryt ist.

6. Material nach irgendeinem der Ansprüche 1 bis 5, dadurch gekennzeichnet, daß die Füllstoff-Menge 500 bis 1500 Teile desselben auf 100 Teile des trockenen Kautschuks oder anderen Polymers in dem getrockneten Polymer-Produkt beträgt.

7. Material nach irgendeinem der Ansprüche 1 bis 6, dadurch gekennzeichnet, daß das grenzflächenaktive Mittel ein nicht-ionisches grenzflächenaktives Mittel ist, das ein Polyethylenoxidalkylphenol-Kondensat mit 10 bis 50 Ethylenoxid-Einheiten ist und in einer Menge von 1,5 bis 5 Teilen auf 100 Teile des trockenen Kautschuks oder anderen Polymers im Endprodukt vorliegt.

8. Material nach irgendeinem der Ansprüche 1 bis 7, dadurch gekennzeichnet, daß die faserige Matte eine Vliesmatte aus Glasfasern ist oder Baumwollfilz ist.

9. Material nach irgendeinem der Ansprüche 1 bis 8, dadurch gekennzeichnet, daß die faserige Matte oder das polymere zellförmige Material mit einem Überzug von 3 bis 6 kg/m$^2$ beschichtet wird.

10. Verfahren zur Herstellung eines Schallschluckmaterials, bei dem eine faserige Matte oder ein polymers zellförmiges Material mit einer gefüllten Latex- oder Emulsions-Zusammensetzung beschichtet wird, die aus elastomeren oder plastifizierten plastomeren Latices oder Emulsionen von Styrol-Butadien-Kautschuken, Polychloropren, Polyvinylchlorid oder Ethylen-Vinylacetate-Copolymerisaten oder Mischungen von zwei oder mehr dieser Stoffe ausgewählt ist, wobei die Zusammensetzung mit einem Füllstoff mit einem spezifischen Gewicht von wenigstens 2,5 und einer Teilchengröße von 1 bis 200 µm, wobei die Menge des Füllstoffs 60 bis 85 Gew.-% des Gesamt-Feststoff-Gehalts der feuchten Zusammensetzung vor dem Trocknen beträgt, zusammen mit wenigstens 1,5 Teilen eines anionischen oder nicht-ionischen grenzflächenaktiven Mittels auf 100 Teile des trockenen Kautschuks oder anderen Polymers gefüllt ist, und anschließend das beschichtete faserige oder polymere zellförmige Material getrocknet wird.

11. Verfahren nach Anspruch 10, dadurch gekennzeichnet, daß sowohl die Viskosität der Zusammensetzung als auch die Porosität des faserigen oder polymeren zellförmigen Materials vor dem Beschichten solche Werte aufweisen, daß eine ausreichende Imprägnierung der faserigen Matte oder des polymeren zellförmigen Materials durch die Zusammensetzung sichergestellt sind, wodurch die Zusammensetzung sowohl auf der faserigen Matte oder dem zellförmigen Material als auch innerhalb eines Teils derselben (desselben) vermittels mechanischer Adhäsion zurückgehalten wird.

12. Latex-Zusammensetzung, enthaltend ein Latex oder eine Emulsion ausgewählt aus elastomeren oder plastifizierten plastomeren Latices oder Emulsionen von Styrol-Butadien-Kautschuken, Polychloropren, Polyvinylchlorid oder Ethylen-Vinylacetat-Copolymerisaten oder Mischungen von zwei oder mehr dieser Stoffe, die einen Füllstoff mit einem spezifischen Gewicht von wenigstens 2,5 und einer Teilchengröße von 1 bis 200 µm, wobei die Menge des Füllstoffs 60 bis 85 Gew.-% des Gesamt-Feststoff-Gehalts oder feuchten Zusammensetzung vor dem Trocknen beträgt, zusammen mit wenigstens 1,5 Teilen eines anionischen oder nicht-ionischen grenzflächen-aktiven Mittels auf 100 Teile des trockenen Kautschuks oder anderen Polymers enthalten.

**Revendications**

1. Une matière d'amortissement acoustique comprenant un mat fibreux ou une matière cellulaire polymère revêtu(e) d'une composition choisie parmi les latex ou émulsions élastomère et plastomères plastifiés de caoutchoucs styrène-butadiène, de polychloroprène, de chlorure de polyvinyle ou de copolymères éthylène-acétate de vinyle, ou d'un mélange de deux ou plusieurs de ceux-ci, et séché(e), la composition contenant une charge ayant une densité d'au moins 2,5 et une grosseur de particules de 1 à 200 micromètres, la quantité de charge étant appropriée pour donner de 60 à 85% de matières solides totales par rapport au poids de la composition humide avant séchage, ainsi qu'au moins 1,5 partie, par 100 parties de caoutchouc ou autre polymère sec, d'un agent tensio-actif anionique ou non-ionique.

2. Une matière selon la revendication 1, dans laquelle le latex ou émulsion est un latex de polychloroprène.

3. Une matière selon la revendication 1 ou 2, dans laquelle la charge a une densité de 3 ou plus.

4. Une matière selon l'une quelconque des revendications 1 à 3, dans laquelle la charge a une grosseur de particules moyennes de 75 à 100 micromètres.

5. Une matière selon l'une quelconque des revendications 1 à 4, dans laquelle la charge est formée de barytine.

6. Une matière selon l'une quelconque des revendications 1 à 5, dans laquelle la quantité de charge

10

représente de 500 à 1500 parties par 100 parties de caoutchouc ou autre polymère sec dans le produit polymère séché.

7. Une matière selon l'une quelconque des revendications 1 à 6, dans laquelle l'agent tensio-actif est un agent tensio-actif non-ionique qui est un produit de condensation oxyde de polyéthylène-alkyl phénol contenant 10 à 50 unités oxyéthylène et est présent à raison de 1,5 à 5 parties par 100 parties de caoutchouc ou autre polymère sec dans le produit final.

8. Une matière selon l'une quelconque des revendications 1 à 7, dans laquelle le mat fibreux est un mat non-tissé de fibres de verre ou est un feutre de coton.

9. Une matière selon l'une quelconque des revendications 1 à 8, dans laquelle le mat fibreux ou la matière cellulaire polymère est revêtu(e) à une poids de revêtement de 3 à 6 kg/m² de matière.

10. Un procédé de préparation d'une matière d'amortissement acoustique qui consiste à revêtir un mat fibreux ou une matière cellulaire polymère avec une composition de latex ou d'émulsion chargée choisie parmi les latex élastomères et plastomères plastifiés de caoutchoucs styrène-butadiène, de polychloroprène, de chlorure de polyvinyle, ou de copolymères éthylène-acétate de vinyle, ou d'un mélange de deux ou plusieurs de ceux-ci, la composition étant chargée avec une charge ayant une densité d'au moins 2,5 et une grosseur de particules de 1 à 200 micromètres, la quantité de charge étant appropriée pour donner de 60 à 85% de matières solides totales par rapport au poids de la composition humide avant séchage, la composition contenant au moins 1,5 partie, par 100 parties de caoutchouc ou autre polymère sec, d'un agent tensio-actif anionique ou non-ionique, puis à sécher le mat fibreux ou la matière cellulaire polymère revêtu(e).

11. Un procédé selon la revendication 10, dans lequel la viscosité de la composition et la porosité de la matière fibreuse ou cellulaire polymère avant la revêtement sont toutes deux appropriées pour permettre une imprégnation du mat fibreux ou de la matière cellulaire polymère par la composition, de manière que la composition soit retenue à la fois sur le mat fibreux ou la matière cellulaire polymère et au sein d'une partie de celui-ci ou de celle-ci par adhérence mécanique.

12. Une composition de latex comprenant un latex ou émulsion, choisi parmi les latex ou émulsions élastomères et plastomères plastifiés de coaoutchoucs styrène-butadiène, de polychloroprène, de chlorure de polyvinyle ou de copolymères éthylène-acétate de vinyle ou d'un mélange de deux ou plusieurs de ceux-ci, contenant une charge ayant une densité d'au moins 2,5 et une grosseur de particules de 1 à 200 micromètres, la quantité de charge étant appropriée pour donner de 60 à 85% de matières solides totales par rapport au poids de la composition humide, ainsi qu'au moins 1,5 partie, par 100 parties de caoutchouc ou autre polymère sec, d'un agent tensio-actif anionique ou non-ionique.